(19) Europäisches Patentamt
European Patent Office
Office européen des brevets

(11) **EP 3 832 093 A1**

(12) **EUROPEAN PATENT APPLICATION**
published in accordance with Art. 153(4) EPC

(43) Date of publication:
**09.06.2021 Bulletin 2021/23**

(51) Int Cl.:
*F02C 6/16* (2006.01)    *F01C 20/04* (2006.01)
*H02J 3/28* (2006.01)    *H02J 15/00* (2006.01)

(21) Application number: **19876766.7**

(22) Date of filing: **10.10.2019**

(86) International application number:
**PCT/JP2019/040033**

(87) International publication number:
**WO 2020/085105 (30.04.2020 Gazette 2020/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **23.10.2018  JP 2018199026**

(71) Applicant: **KABUSHIKI KAISHA KOBE SEIKO SHO (KOBE STEEL, LTD.)**
**Hyogo 651-8585 (JP)**

(72) Inventors:
• **SATO, Takashi**
  **Takasago-shi, Hyogo 676-8670 (JP)**
• **NAKAMICHI, Ryo**
  **Takasago-shi, Hyogo 676-8670 (JP)**

(74) Representative: **TBK**
**Bavariaring 4-6**
**80336 München (DE)**

(54) **COMPRESSED-AIR-STORING POWER GENERATION APPARATUS AND COMPRESSED-AIR-STORING POWER GENERATION METHOD**

(57)    A compressed-air-storing power generation apparatus 1 comprises a plurality of compression/expansion devices 14 having a function of producing compressed air using electric power and a function of generating electricity using compressed air, an accumulator 10 that is fluidly connected to the plurality of compression/expansion devices 14 and that accumulates compressed air, and a control apparatus 16 that stops first compression/expansion devices 14 which are being driven and drives second compression/expansion devices 14 which have stopped when a charge/discharge command value to switch between charging and discharging is generated.

F I G . 1

EP 3 832 093 A1

**Description**

TECHNICAL FIELD

The present invention relates to a compressed air energy storage power generation device and a compressed air energy storage power generation method.

BACKGROUND ART

In power generation utilizing renewable energy such as wind power or sunlight, a power generation amount varies according to weather. For smoothing the varying power generation amount, an energy storage device is, in some cases, additionally provided at a power plant utilizing the renewable energy, such as a wind power plant or a photovoltaic power plant. As one example of such an energy storage device, a compressed air energy storage (CAES) power generation device has been known. The CAES power generation device generates and stores compressed air by utilizing power, and appropriately generates power by, e.g., a turbine generator by means of the stored compressed air. Moreover, a compressor expander machine including a motor generator machine may be multiple stages of compressor expander machines configured to perform compression or expansion at multiple stages by one motor generator machine.

Patent Document 1 describes an adiabatic compressed air energy storage (ACAES) power generation device configured to recover heat from compressed air before the compressed air is stored and reheat the stored compressed air when the stored compressed air is supplied to a turbine generator. The ACAES power generation device recovers compression heat to use the compression heat upon power generation, and therefore, has a higher power generation efficiency than that of the normal CAES power generation device. Hereinafter, the ACAES power generation device and the CAES power generation device will be also referred to as a CAES power generation device without these devices being distinguished from each other.

CITATION LIST

PATENT DOCUMENT

Patent Document 1: JP-T-2013-509529

SUMMARY OF THE INVENTION

PROBLEM TO BE SOLVED BY THE INVENTION

Considering, e.g., an installation space, the compressor expander machine configured so that a compressor driven by an electric motor can also serve as an expander configured to drive a generator is used in the CAES power generation device in some cases. The compressor expander machine includes the motor generator machine having both functions of the electric motor and the generator. Thus, the compressor expander machine can switch between a compression function (a charging function in the CAES power generation device) and an expansion function (a discharging function in the CAES power generation device) according to situation. That is, switching between charging and discharging can be performed.

In the CAES power generation device, switching between charging and discharging is accompanied by temperature control etc., and therefore, cannot be smoothly performed in many compressor expander machines. That is, stand-by time for performing switching between charging and discharging is caused. Such stand-by time degrades an operation efficiency of the CAES power generation device, and for this reason, is preferably as short as possible. In the CAES power generation device of Patent Document 1, no compressor expander machine is used. Moreover, Patent Document 1 fails to describe the stand-by time accompanied by switching between charging and discharging. Thus, for applying the compressor expander machine to the CAES power generation device of Patent Document 1 to realize efficient operation, the technique of shortening the above-described stand-by time is necessary.

The present invention is intended to shorten stand-by time accompanied by switching between charging and discharging of a compressor expander machine in a compressed air energy storage power generation device and a compressed air energy storage power generation method using the compressor expander machines.

SOLUTION TO THE PROBLEM

A first aspect of the present invention provides a compressed air energy storage power generation device including multiple compressor expander machines having the function of generating compressed air by utilizing power and the function of generating power by utilizing the compressed air, a pressure accumulation section connected to the multiple compressor expander machines in a fluid manner and configured to store the compressed air, and a control device configured to stop a driven first compressor expander machine and drive a stopped second compressor expander machine when a charging/discharging command value for performing switching between charging and discharging is generated.

According to this configuration, stand-by time accompanied by switching between charging and discharging can be shortened or eliminated by control of the multiple compressor expander machines. The compressed air energy storage power generation device generates compressed air by means of power (input power), stores the compressed air in the pressure accumulation section, and appropriately generates required power (power demand) by means of the stored compressed air. In some cases, when balance between the input power and the power demand changes over time, switching between charging and discharging is required. In the above-described configuration, when the charging/discharging command value for performing switching between charging and discharging is generated, switching between charging and discharging of the driven first compressor expander machine is not performed upon use, but the driven first compressor expander machine is stopped and the stopped second compressor expander machine is driven. Stop of the first compressor expander machine and activation of the second compressor expander machine can be performed at the same time, and therefore, the stand-by time accompanied by switching between charging and discharging can be eliminated. Charging as described herein means that the compressor expander machine is used as a compressor to generate compressed air and the compressed air is stored in the pressure accumulation section. Discharging means that the compressor expander machine is used as an expander (a generator) to draw compressed air from the pressure accumulation section and generate power. The charging/discharging command value is a command value for specifying a charging amount or a discharging amount for the compressed air energy storage power generation device.

The charging/discharging command value may be a charging/discharging predicted or planned value.

According to this configuration, control is performed based on the charging/discharging predicted or planned value, and therefore, efficient control with less time delay can be performed. The charging/discharging predicted or planned value may be, for example, calculated based on previous data in the same period of time. Alternatively, in a case where the input power is power generated by renewable energy such as sunlight or wind power, an input power amount (a charging amount) may be predicted based on a weather condition. In a case where the power demand is power required for, e.g., equipment at a factory, the input power amount may be predicted according to the period of time of operation of, e.g., the equipment at the factory, such as the daytime or the nighttime.

The control device may set a fatigue amount for each of the multiple compressor expander machines, and when the charging/discharging command value for performing switching between charging and discharging is generated, may drive the second compressor expander machine in ascending order of the fatigue amount.

According to this configuration, the degree of wear of the compressor expander machine can be uniform. If a particular compressor expander machine is intensively driven without uniformization of the wear degree, there is a probability that maintenance of the particular compressor expander machine needs to be performed at an earlier stage and the frequency of maintenance of the entirety of the CAES power generation device increases. Thus, uniformization of the wear degree is effective for reducing the maintenance frequency. Note that each of the first compressor expander machine and the second compressor expander machine may be one compressor expander machine or one unit of multiple compressor expander machines.

The fatigue amount may be expressed by a function based on the number of times of switching between charging and discharging.

According to this configuration, the fatigue amount is set based on the number of times of switching between charging and discharging. Thus, the degree of wear of the compressor expander machine can be more uniform. Particularly, the number of times of switching between charging and discharging is a parameter unique to the compressor expander machine, the parameter being not taken into consideration in a normal compressor or expander. Thus, the degree of wear in the compressor expander machine can be accurately uniformized.

A second aspect of the present invention provides a compressed air energy storage power generation device including multiple compressor expander machines each including motor generator machines, a pressure accumulation section connected to the multiple compressor expander machines in a fluid manner and configured to store compressed air, and a control device configured to stop a currently-operated compressor expander machine and drive a currently-stopped compressor expander machine when a charging/discharging command value for performing switching between charging and discharging is generated.

According to this configuration, the stand-by time accompanied by switching between charging and discharging can be shortened or eliminated by control of the multiple compressor expander machines, as described above.

The multiple compressor expander machines may include at least three compressor expander machines. The control device may set a fatigue amount for each of the multiple compressor expander machines, and when the charging/discharging command value for performing switching between charging and discharging is generated, may drive the second compressor expander machine in ascending order of the fatigue amount.

According to this configuration, the degree of wear of the compressor expander machine can be uniform as described above.

The fatigue amount may be expressed by a function based on the number of times of switching between charging and discharging.

According to this configuration, the fatigue amount is, as described above, set based on the number of times of switching between charging and discharging, and therefore, the degree of wear of the compressor expander machine can be more uniform.

A third aspect of the present invention provides a compressed air energy storage power generation method including preparing a compressed air energy storage power generation device including multiple compressor expander machines having the function of generating compressed air by utilizing power and the function of generating power by utilizing the compressed air and a pressure accumulation section connected to the multiple compressor expander machines in a fluid manner and configured to store the compressed air and stopping a driven first compressor expander machine and driving a stopped second compressor expander machine when a charging/discharging command value for performing switching between charging and discharging is generated.

According to this method, the stand-by time accompanied by switching between charging and discharging can be eliminated by control of the multiple compressor expander machines, as described above.

EFFECTS OF THE INVENTION

According to the present invention, the stand-by time accompanied by switching between charging and discharging can be eliminated by control of the multiple compressor expander machines in the compressed air energy storage power generation device and the compressed air energy storage power generation method using the compressor expander machines.

BRIEF DESCRIPTION OF DRAWINGS

[Fig. 1] Fig. 1 is a schematic configuration view of a compressed air energy storage power generation device according to one embodiment of the present invention.
[Fig. 2] Fig. 2 is an internal plan view of a first container.
[Fig. 3] Fig. 3 is an internal side view of the first container.
[Fig. 4] Fig. 4 is a flowchart of the outline of control of the compressed air energy storage power generation device.
[Fig. 5] Fig. 5 is a flowchart of power generation processing.
[Fig. 6] Fig. 6 is a flowchart of charging processing.

DESCRIPTION OF EMBODIMENTS

Hereinafter, one embodiment of the present invention will be described with reference to the attached drawings.

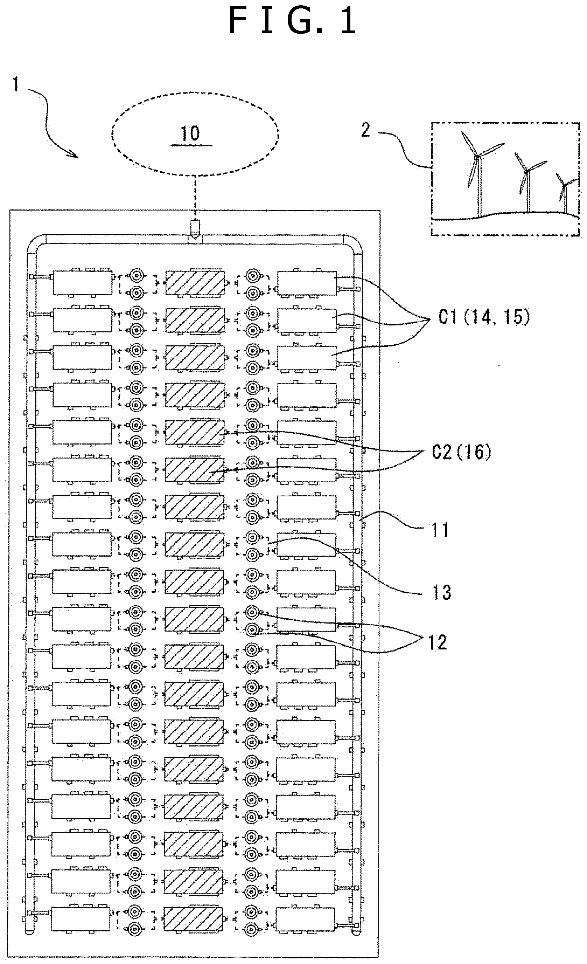

Referring to Fig. 1, a compressed air energy storage (CAES) power generation device 1 and a wind power plant 2 are electrically connected to a not-shown system power source. A power generation amount of the wind power plant 2 varies according to, e.g., weather, and for this reason, the CAES power generation device 1 is provided as an energy storage device configured to smooth this varying power generation amount to transmit power to the system power source or receive power from the system power source.

The CAES power generation device 1 includes first containers C1 having a charging/discharging function, second containers C2 having a control function, a pressure accumulation section 10, and heat medium tanks 12. The first containers C1 and the pressure accumulation section 10 are connected to each other via an air pipe 11. The heat medium tanks 12 are connected to the first container C1 and the second container C2 via a heat medium pipe 13. The first containers C1 are arranged in two lines along the air pipe 11. The second containers C2 are, between two lines of the first containers C1, arranged in a line in the same direction as that of the first containers C1. Note that such arrangement is not specifically limited, and may be changed as necessary according to a condition such as a landform.

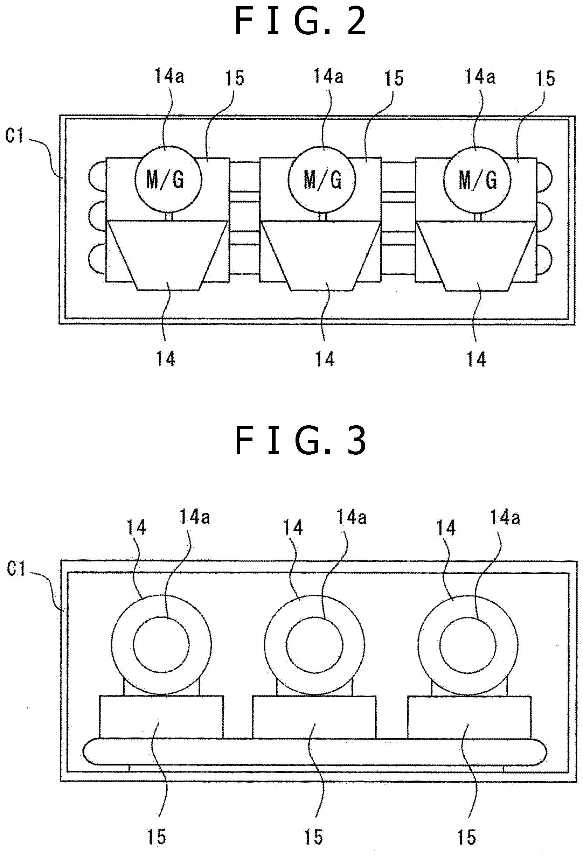

The pressure accumulation section 10 is conceptually illustrated in Fig. 1. Compressed air is stored in the pressure accumulation section 10. The form of the pressure accumulation section 10 is not specifically limited as long as compressed air can be stored, and for example, may be a copper tank or an underground cavity. As described later, the pressure accumulation section 10 is connected to compressor expander machines 14 (see Figs. 2 and 3) in the first containers C1 via the air pipe 11 in a fluid manner.

The heat medium tanks 12 are arranged between the first container C1 and the second container C2. For example, the heat medium tank 12 may be a copper tank. A heat medium is stored in the heat medium tank 12. The type of heat medium is not specifically limited, and may be water or oil, for example. In the present embodiment, the heat medium flows among two heat medium tanks 12, one first container C1, and one second container C2, and these components form one closed heat medium system. Preferably, one of two heat medium tanks 12 stores a high-temperature heat medium, and the other heat medium tank 12 stores a low-temperature heat medium.

Referring to Fig. 2, the inside of the first container C1 will be described.

In the first container C1, three compressor expander machines 14 and three heat exchangers 15 are housed. Specifically, one heat exchanger 15 is provided for one compressor expander machine 14.

The compressor expander machine 14 performs switching between an inlet and an outlet of air to switch an air flow direction such that a compressor driven by an electric motor also serves as an expander configured to drive a generator. The compressor expander machine 14 includes a motor generator machine 14a. In the present embodiment, the compressor expander machine 14 is of a screw type, and has a pair of not-shown female and male screw rotors. The motor generator machine 14a is mechanically connected to the screw rotors. The motor generator machine 14a has a function as an electric motor and a function as a generator, and switching between these functions can be performed upon use. The motor generator machine 14a is used as the electric motor, and the screw rotors are rotated (i.e., the compressor is driven). In this manner, air can be compressed. Moreover, the screw rotors are rotated using such compressed air (i.e., the compressed air is expanded to drive the expander), and in this manner, the motor generator machine 14a can be used as the generator. Thus, the compressor expander machine 14 has the function of compressing air by consuming power from the wind power plant 2 and the function of generating power by utilizing compressed air from the pressure accumulation section 5. Note that in the present embodiment, the compressor expander machine 14 may be of a type other than the screw type as long as the compressor expander machine 14 is of a positive displacement type.

The heat exchanger 15 has a function as a cooler configured to cool compressed air and a function as a heater configured to heat compressed air, and switching between these functions can be performed upon use. The heat exchanger 15 may be of a general-purpose plate type, for example. When the heat exchanger 15 functions as the cooler configured to cool compressed air, the compressor expander machine 14 functions as the compressor, and high-temperature compressed air compressed by the compressor expander machine 14 and the low-temperature heat medium flow into the heat exchanger 15 and the cooled compressed air and the heated heat medium after heat exchange flow out of the heat exchanger 15. When the heat exchanger 15 functions as the heater configured to heat compressed air, the compressor expander machine 14 functions as the generator, and low-temperature compressed air and the high-temperature heat medium supplied to the compressor expander machine 14 flow into the heat exchanger 15 and the heated compressed air and the cooled heat medium after heat exchange flow out of the heat exchanger 15.

The second container C2 houses a pump for generating a heat medium flow, an inverter/converter/resistor for changing the rotational speed of the compressor expander machine 14, a control device 16, etc. The control device 16 is built of hardware such as a central processing unit (CPU), a random access memory (RAM), and a read only memory (ROM) and software mounted on such hardware. The control device 16 receives data regarding power (power demand) required from, e.g., a not-shown factory and power (input power) from the wind power plant 2. Specifically, the control device 16 receives, as a charging/discharging command value W, a value obtained by subtraction of the power demand from the input power. The control device 16 determines, according to the charging/discharging command value W, whether power is surplus or insufficient, thereby controlling operation of the CAES power generation device 1. That is, based on such determination by the control device 16, switching between charging and discharging of the compressor expander machine 14 and control of the rotational speed of the compressor expander machine 14 are performed.

Charging means that the compressor expander machine 14 is used as the compressor to generate compressed air and the compressed air is stored in the pressure accumulation section 10. Discharging means that the compressor expander machine 14 is used as the expander (the generator) to draw compressed air from the pressure accumulation section 10 and generate power. The charging/discharging command value W is a command value for specifying a charging amount or a discharging amount for the CAES power generation device 1. Based on the charging/discharging command value W, charging is performed when the input power is higher than the power demand, and discharging (hereinafter also referred to as power generation) is performed when the power demand is higher than the input power.

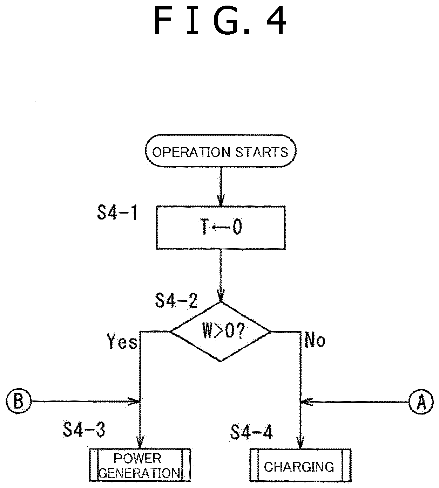

Control of operation of the CAES power generation device 1 of the present embodiment will be described with reference to Figs. 4 to 6.

Referring to Fig. 4, when operation of the CAES power generation device 1 starts, counting of time T starts from zero (a step S4-1). Then, it is determined whether or not the charging/discharging command value W is greater than zero (a step S4-2). When the charging/discharging command value W is greater than zero (Yes: the step S4-2), power generation processing is executed (a step S4-3). When the charging/discharging command value W is equal to or less than zero (No: the step S4-2), charging processing is executed (a step S4-4).

The charging/discharging command value W greater than zero means that the power demand from, e.g., the factory is higher than the input power from the wind power plant 2. In this case, even if power is directly supplied from the wind power plant 2 to, e.g., the factory, power is still insufficient. Thus, power corresponding to such a deficiency is generated. Moreover, the charging/discharging command value W equal to or less than zero means that the input power from the wind power plant 2 is higher than the power demand from, e.g., the factory. In this case, even if power is directly supplied from the wind power plant 2 to, e.g., the factory, power is still surplus. Thus, power corresponding to such a surplus is charged.

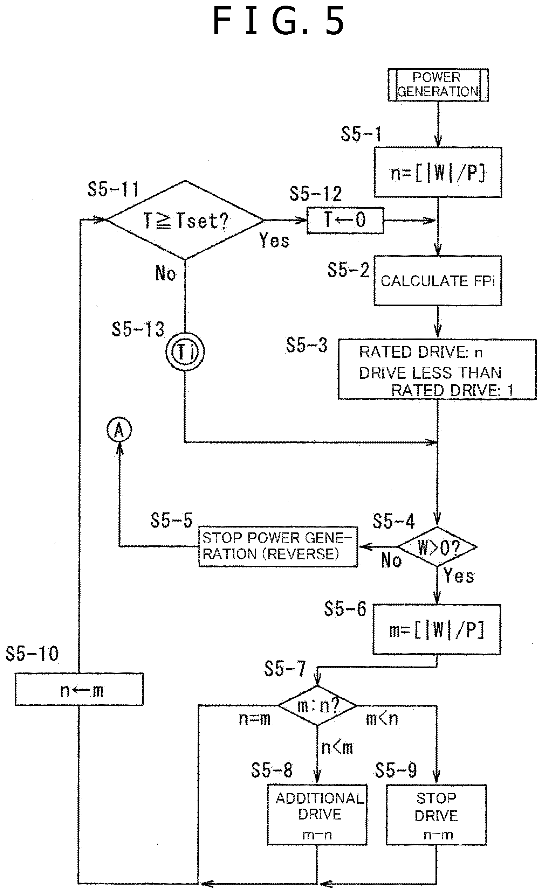

Referring to Fig. 5, the number of compressor expander machines 14 rated-driven as the generators is first calculated in the power generation processing (a step S5-1). In the present embodiment, drive control is performed for each first container C1, and therefore, the number of rated-driven machines is calculated as the number of rated-driven first containers C1. That is, the number n of rated-driven units is calculated, taking three compressor expander machines 14 in one first container C1 as one unit. Assuming that a rated drive output per unit is P, the unit number n is calculated as the maximum integer n not exceeding a number obtained by division of an absolute value of the charging/discharging command value W by the output P (n = [|W|/P]).

Subsequently, a fatigue amount FPi of each compressor expander machine 14 is calculated (a step S5-2). In the present embodiment, the drive control is performed for each first container C1 as described above, and therefore, the fatigue amount FPi is calculated for each unit as described above. Thus, if the number of first containers C1 is N, N units are present in total, and therefore, the fatigue amount FPi is calculated as FP1, FP2, ... , FPN.

The fatigue amount FPi is, as a summation result of an operation time function fa, an activation frequency function fb, and an inverse frequency function fc, represented by Expression (1) below.

[Expression 1]

$$FPi = fa(TCi, TGi) + fb(NCi, NGi) + fc(GCi) \ (1),$$

TCi: an integral value of a charging-side operation output of an i-th unit;

TGi: an integral value of a power-generation-side operation output of the i-th unit;

NCi: the cumulative number of times of charging operation (the number of times of activation as the compressor) of the i-th unit;

NGi: the cumulative number of times of power generation operation (the number of times of activation as the generator) of the i-th unit; and

GCi: the number of times of switching between charging and discharging of the i-th unit.

The operation time function fa is a function for accumulation of operation time, and includes the integral values TCi, TGi as parameters. For the operation time function fa, accumulation is constantly continued during operation. That is, the operation time function fa is constantly updated to a latest value during operation. The operation time function fa may be, for example, represented by Expression (2) below, taking a1 and a2 as positive constants.

[Expression 2]

$$fa = a1 \times TCi + a2 \times TGi \ (2)$$

The activation frequency function fb is a function for accumulation of the number of times of activation, and includes the frequencies NCi, NGi as parameters. The activation frequency function fb is updated every time the compressor expander machine 14 is activated. The activation frequency function fb may be, for example, represented by Expression (3) below, taking a3 and a4 as positive constants.

[Expression 3]

$$fb = a3 \times NCi + a4 \times NGi \ (3)$$

The inverse frequency function fc is a function for accumulation of an inverse frequency, and includes the switching frequency GCi as a parameter. The inverse frequency function fc is updated every time the compressor expander machine 14 is reversely activated. When the compressor expander machine 14 is reversely activated, predetermined stop time τ is ensured so that wear due to switching between charging and discharging can be prevented. Thus, the inverse frequency function fc may be represented by Expression (4) below, taking a5 as a positive constant, taking t as time elapsed after the compressor expander machine 14 has been stopped, and taking τ as the predetermined stop time. According to Expression (4) below, the inverse frequency function fc is zero after a lapse of the predetermined stop time τ, assuming that influence of a previous rotation direction is eliminated after a lapse of the predetermined stop time τ.

[Expression 4]

$$\text{fc} = \frac{a5 \times Gci \times (\tau - t)}{\tau} \ (t \le \tau) \ (4)$$

$$= 0 \ (\tau < t)$$

Subsequently, the compressor expander machines 14 of the n units are rated-driven as the generators in ascending order of the fatigue amount FPi, and as the generators, one unit is driven by an amount corresponding to remaining power (|W|- n × P) (a step S5-3). Then, it is determined again whether or not the charging/discharging command value W is greater than zero (a step S5-4). When the charging/discharging command value W is equal to or less than zero (No: the step S5-4), power generation is reversed and charging becomes necessary. Thus, power generation is stopped (a step S5-5). Then, the charging processing is executed (the step S4-4), referring to Fig. 4. Note that a reference character A of Fig. 4 and a reference character A of Fig. 5 indicate connection in control processing.

Referring to Fig. 5, when the charging/discharging command value W is greater than zero (Yes: the step S5-4), the power generation processing is continuously executed, but the number of rated-driven units is calculated as m (a step S5-6). The method for calculating the unit number m is the same as the method for calculating the unit number n as described above. When the unit number n and the unit number m are equal to each other (n = m: a step S5-7), it is not necessary to increase/decrease the number of driven compressor expander machines 14, and therefore, no special processing is executed. When the unit number n is less than the unit number m (n < m: the step S5-7), m - n units are additionally driven as the rated-driven compressor expander machines 14 (a step S5-8). At this point, the units are additionally driven in ascending order of the fatigue amount FPi. When the unit number n is greater than the unit number m (n > m: the step S5-7), the compressor expander machines 14 of n - m units are stopped (a step S5-9). At this point, the units are stopped in descending order of the fatigue amount FPi. After completion of these types of processing (the step S5-7, the step S5-8, the step S5-9), the value of the unit number m is updated as the value of the unit number n (a step S5-10).

Subsequently, it is determined whether or not the time T is equal to or greater than a predetermined value Tset (a step S5-11). In a case where the time T is equal to or greater than the predetermined time Tset (Yes: the step S5-11), the time T is reset to zero and counting of the time T starts again (a step S5-12), and the processing returns to the processing of calculating the fatigue amount FPi (the step S5-2). By such resetting, even in a case where the charging/discharging command value W does not change, the driven compressor expander machines 10 can be forcibly changed every lapse of the predetermined time Tset, and continuous use of the same compressor expander machines 10 can be prevented. The predetermined time Tset as described herein is set as necessary according to, e.g., a use condition, and for example, may be set to about 24 hours. In a case where the time T is less than the predetermined time Tset (No: the step S5-11), the control processing stands by for certain time Ti (a step S5-13), and thereafter, the processing returns again to the processing of determining whether or not the charging/discharging command value W is greater than zero (the step S5-4). The compressor expander machine 10 requires a certain amount of time until completion of activation after the start of activation or until completion of stop after the start of stop. For example, tens of seconds are required for such processing. Meanwhile, the driven compressor expander machines 10 cannot be switched, and in some cases, the processing is not performed even after transmission of a control signal. For this reason, the control processing stands by for about tens of seconds as the certain time Ti, and therefore, transmission of an unprocessable control signal to the compressor expander machine 10 can be prevented. Thus, activation or stop of the compressor expander machine 10 can be completed during such stand-by processing.

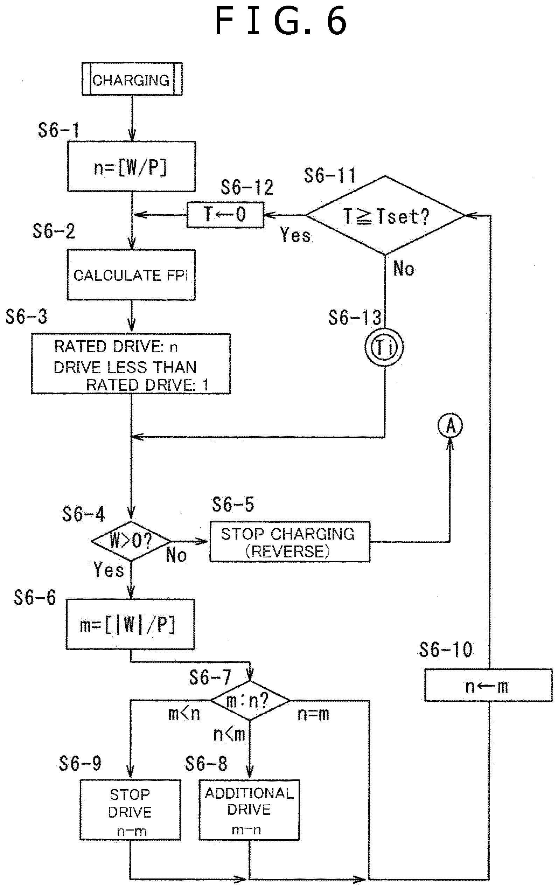

Referring to Fig. 6, the number of compressor expander machines 14 to be rated-driven as the compressors is first calculated in the charging processing (a step S6-1). In the present embodiment, the unit number n of the rated-driven compressor expander machines 14 is calculated as in the power generation processing. Assuming that the rated drive output per unit is P, the unit number n is calculated as the maximum integer n not exceeding the number obtained by division of the charging/discharging command value W by the output P (n = [|W|/P]).

Subsequently, a fatigue amount FPi of each unit of the compressor expander machines 14 is calculated (a step S6-2). The method for calculating the fatigue amount FPi is similar to that in the case of the power generation processing as described above.

Subsequently, the compressor expander machines 14 of the n units are rated-driven as the compressors in ascending order of the fatigue amount FPi, and as the compressor, one compressor expander machine 14 is driven by the amount corresponding to the remaining power (|W|- n × P) (a step S6-3). Then, it is determined again whether or not the charging/discharging command value W is greater than zero (a step S6-4). When the charging/discharging command value W is equal to or less than zero (No: the step S6-4), charging is reversed and power generation becomes necessary. Thus, charging is stopped (a step S6-5). Then, the power generation processing is executed (the step S4-3), referring to Fig. 4. Note that a reference character B of Fig. 4 and a reference character B of Fig. 6 indicate connection in the control processing.

Referring to Fig. 6, when the charging/discharging command value W is greater than zero (Yes: the step S6-4), the charging processing is continuously executed, but the number of rated-driven units is calculated as m again (a step S6-6). The method for calculating the unit number m is the same as the method for calculating the unit number n as described above. When the unit number n and the unit number m are equal to each other (n = m: a step S6-7), it is not necessary to increase/decrease the number of driven compressor expander machines 14, and therefore, no special processing is executed. When the unit number n is less than the unit number m (n < m: the step S6-7), the m - n units are additionally driven as the rated-driven compressor expander machines 14 (a step S6-8). At this point, the units are additionally driven in ascending order of FPi. When the unit number n is greater than the unit number m (n > m: the step S6-7), the compressor expander machines 14 of the n - m units are stopped (a step S6-9). At this point, the units are stopped in descending order of the fatigue amount FPi. After completion of these types of processing (the step S6-7, the step S6-8, the step S6-9), the value of the unit number m is updated as the value of the unit number n (a step S6-10).

Subsequently, it is determined whether or not the time T is equal to or greater than the predetermined value Tset (a step S6-11). In a case where the time T is equal to or greater than the predetermined time Tset (Yes: the step S6-11), the time T is reset to zero and counting of the time T starts again (a step S6-12), and the processing returns to the processing of calculating the fatigue amount FPi (the step S6-2). In a case where the time T is less than the predetermined time Tset (No: the step S6-11), the control processing stands by for the certain time Ti (a step S6-13), and thereafter, the processing returns again to the processing of determining whether or not the charging/discharging command value W is greater than zero (the step S6-4). Note that the contents of the processing from the step S6-10 to the step S6-13 are the same as the contents of the processing from the step S5-10 to the step 5-13 as previously described with reference to Fig. 5.

As described above, in the present embodiment, when the charging/discharging command value W for performing switching between charging and discharging is generated, the driven compressor expander machines 14 are stopped, and the compressor expander machines 14 are activated in ascending order of the fatigue amount FPi. Stop and activation at this point are executed at the same time. The inverse frequency function fc used for calculation of the fatigue amount FPi is for ensuring the predetermined stop time $\tau$ when the compressor expander machines 14 are reversely activated to prevent the wear due to switching between charging and discharging. Thus, the inverse frequency function fc is used for calculation of the fatigue amount FPi, and therefore, switching between charging and discharging of the driven compressor expander machine 14 is not substantially performed upon use, but the driven compressor expander machines 14 are stopped and the stopped compressor expander machines 14 are driven. Note that for reliably preventing the wear due to switching, the contribution of the inverse frequency function fc to calculation of the fatigue amount FPi may be greater than those of the other functions fa, fb.

According to the CAES power generation device 1 of the present embodiment, the following advantageous features and effects are obtained.

The multiple compressor expander machines 14 are suitably controlled as described above, and therefore, stand-by time accompanied by switching between charging and discharging can be shortened or eliminated. The CAES power generation device 1 generates compressed air by means of power (the input power) generated by the wind power plant 2, stores the compressed air in the pressure accumulation section 10, and appropriately generates required power (the power demand) by means of the stored compressed air. Balance between the input power and the power demand changes over time, and therefore, switching between charging and discharging is required in some cases. In the configuration of the present embodiment, when the charging/discharging command value W for performing switching between charging and discharging is generated, switching between charging and discharging of the driven compressor expander machine 14 is not performed upon use, but the driven compressor expander machines 14 are stopped and the stopped compressor expander machines 14 are driven. Stop of the compressor expander machines 14 and activation of other compressor expander machines 14 can be performed at the same time, and therefore, the stand-by time accompanied by switching between charging and discharging can be eliminated.

The compressor expander machines 14 are driven and controlled according to the fatigue amount FPi, and therefore, the degree of wear of the compressor expander machine 14 can be uniform. If a particular compressor expander machine 14 is intensively driven without uniformization of the wear degree, there is a probability that maintenance of the particular compressor expander machine 14 needs to be performed at an earlier stage and the frequency of maintenance of the entirety of the CAES power generation device 1 increases. Thus, uniformization of the wear degree is effective for reducing the maintenance frequency.

The inverse frequency function fc is used for calculation of the fatigue amount FPi, and the fatigue amount FPi is set based on the number of times of switching between charging and discharging. Thus, the degree of wear of the compressor expander machine 14 can be more uniform. Particularly, the number of times of switching between charging

8

and discharging is a parameter unique to the compressor expander machine 14, the parameter being not taken into consideration in a normal compressor or expander. Thus, the degree of wear in the compressor expander machine 14 can be accurately uniformized.

As a variation of the present embodiment, the charging/discharging command value W may be a charging/discharging predicted or planned value. The charging/discharging predicted or planned value may be, for example, calculated based on previous data in the same period of time. Alternatively, in a case where the input power is power generated by the wind power plant 2 as in the present embodiment, an input power amount (a charging amount) may be predicted based on a weather condition such as a wind direction or a wind strength. Alternatively, in a case where the power demand is power required for factory equipment as in the present embodiment, the input power amount may be predicted according to the period of time of operation of the factory equipment, such as the daytime or the nighttime.

According to the present variation, control is performed based on the charging/discharging predicted value, and therefore, efficient control with less time delay can be performed.

The specific embodiment and variation of the present invention have been described above, but the present invention is not limited to the above-described forms. Various changes can be made within the scope of the invention. For example, the fatigue amount FPi is not necessarily set for each unit of the compressor expander machines 14, but may be set for each compressor expander machine 14. Moreover, drive control is not necessarily performed for each unit of the compressor expander machines 14, but may be performed for each compressor expander machine 14. The wind power plant 2 is one example of equipment configured to supply the input power to the CAES power generation device 1. That is, the input power may be supplied from optional equipment. Preferably, the equipment configured to generate the input power may be equipment configured to generate power by renewable energy, considering that the CAES power generation device 1 has the ability of smoothing varying power. The equipment is not limited to one using the renewable energy, and may be equipment configured to complement a supply capacity, such as a thermal power plant. The compressor expander machine including the motor generator machine may be multiple stages of compressor expander machines configured to perform compression or expansion at multiple stages by one motor generator machine.

EXPLANATION OF REFERENCE NUMERALS

1 Compressed air energy storage power generation device (CAES power generation device)
2 Wind power plant
10 Pressure accumulation section
11 Air pipe
12 Heat medium tank
13 Heat medium pipe
14 Compressor expander machine
14a Motor generator machine
15 Heat exchanger
16 Control device
C1 First container
C2 Second container

**Claims**

1.  A compressed air energy storage power generation device comprising:

    multiple compressor expander machines having a function of generating compressed air by utilizing power and a function of generating power by utilizing the compressed air;
    a pressure accumulation section connected to the multiple compressor expander machines in a fluid manner and configured to store the compressed air; and
    a control device configured to stop a driven first compressor expander machine and drive a stopped second compressor expander machine when a charging/discharging command value for performing switching between charging and discharging is generated.

2.  The compressed air energy storage power generation device according to claim 1, wherein the charging/discharging command value is a charging/discharging predicted or planned value.

**3.** The compressed air energy storage power generation device according to claim 1 or 2, wherein the control device sets a fatigue amount for each of the multiple compressor expander machines, and when the charging/discharging command value for performing switching between charging and discharging is generated, drives the second compressor expander machine in ascending order of the fatigue amount.

**4.** The compressed air energy storage power generation device according to claim 3, wherein the fatigue amount is expressed by a function based on the number of times of switching between charging and discharging.

**5.** A compressed air energy storage power generation device comprising:

multiple compressor expander machines each including motor generator machines;
a pressure accumulation section connected to the multiple compressor expander machines in a fluid manner and configured to store compressed air; and
a control device configured to stop a currently-operated compressor expander machine and drive a currently-stopped compressor expander machine when a charging/discharging command value for performing switching between charging and discharging is generated.

**6.** The compressed air energy storage power generation device according to claim 5, wherein the multiple compressor expander machines include at least three compressor expander machines, and the control device sets a fatigue amount for each of the multiple compressor expander machines, and when the charging/discharging command value for performing switching between charging and discharging is generated, drives the second compressor expander machine in ascending order of the fatigue amount.

**7.** The compressed air energy storage power generation device according to claim 6, wherein the fatigue amount is expressed by a function based on the number of times of switching between charging and discharging.

**8.** A compressed air energy storage power generation method comprising:

preparing a compressed air energy storage power generation device including multiple compressor expander machines having a function of generating compressed air by utilizing power and a function of generating power by utilizing the compressed air and a pressure accumulation section connected to the multiple compressor expander machines in a fluid manner and configured to store the compressed air; and
stopping a driven first compressor expander machine and driving a stopped second compressor expander machine when a charging/discharging command value for performing switching between charging and discharging is generated.

# F I G. 1

# F I G. 2

14a   15   14a   15   14a   15

C1

M/G   M/G   M/G

14   14   14

# F I G. 3

14   14a   14   14a   14   14a

C1

15   15   15

# F I G. 4

```
          ( OPERATION STARTS )
                   │
                   ▼
S4-1         ┌─────────────┐
             │    T←0      │
             └─────────────┘
                   │
                   ▼
S4-2            ◇ W>0? ◇
         Yes ◄         ► No
             │             │
  (B)────────┤             ├────────(A)
             ▼             ▼
S4-3   ┌──────────┐  S4-4  ┌──────────┐
       │  POWER   │        │ CHARGING │
       │GENERATION│        └──────────┘
       └──────────┘
```

EP 3 832 093 A1

# F I G. 5

POWER GENERATION

S5-1 $n=[|W|/P]$

S5-11 $T \geqq Tset?$ → Yes → S5-12 $T \leftarrow 0$

No

S5-13 (Ti)

S5-2 CALCULATE FPi

S5-3 RATED DRIVE: n
DRIVE LESS THAN RATED DRIVE: 1

(A)

S5-5 STOP POWER GENE-RATION (REVERSE) ← No — S5-4 $W>0?$ — Yes

S5-6 $m=[|W|/P]$

S5-10 $n \leftarrow m$

S5-7 $m:n?$
n=m          m<n
n<m

S5-8 ADDITIONAL DRIVE $m-n$          S5-9 STOP DRIVE $n-m$

14

# F I G. 6

CHARGING

S6-1

$n=[W/P]$

S6-12    S6-11

$T \leftarrow 0$    $T \geqq Tset?$

Yes    No

S6-2

CALCULATE FPi

S6-3

RATED DRIVE: n
DRIVE LESS THAN
RATED DRIVE: 1

S6-13

Ti

Ⓐ

S6-4    S6-5

$W>0?$    STOP CHARGING
(REVERSE)

Yes    No

S6-6

$m=[|W|/P]$

S6-10

$n \leftarrow m$

S6-7

$m:n?$

m<n    n=m

n<m

S6-9    S6-8

STOP    ADDITIONAL
DRIVE    DRIVE
n−m    m−n

15

# INTERNATIONAL SEARCH REPORT

| International application No. |
| --- |
| PCT/JP2019/040033 |

**A.  CLASSIFICATION OF SUBJECT MATTER**
Int.Cl.    F02C6/16(2006.01)i,    F01C20/04(2006.01)i,    H02J3/28(2006.01)i,
          H02J15/00(2006.01)i

According to International Patent Classification (IPC) or to both national classification and IPC

**B.  FIELDS SEARCHED**

Minimum documentation searched (classification system followed by classification symbols)
Int.Cl. F02C6/16, F01C11/00, F01C20/04, H02J3/28, H02J15/00

Documentation searched other than minimum documentation to the extent that such documents are included in the fields searched
Published examined utility model applications of Japan          1922–1996
Published unexamined utility model applications of Japan        1971–2019
Registered utility model specifications of Japan                1996–2019
Published registered utility model applications of Japan        1994–2019

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| A | US 2014/0238022 A1 (BOGE KOMPRESSOREN OTTO BOGE GMBH & CO. KG) 28 August 2014 & WO 2013/034284 A1 & DE 102011112280 A1 & CN 103906909 A | 1–8 |
| A | EP 3091176 A1 (RWE DEUTSCHLAND AG) 09 November 2016 & DE 102015205533 A1 | 1–8 |

☒  Further documents are listed in the continuation of Box C.   ☐  See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 03 December 2019 (03.12.2019) | 17 December 2019 (17.12.2019) |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2019/040033

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2018-518144 A (SEGULA ENGINEERING FRANCE) 05 July 2018 & US 2018/0156185 A1 & WO 2016/193322 A1 & EP 3303825 B1 & FR 3036887 A1 & DK 3303825 T3 & PT 3303825 T | 1-8 |
| A | JP 2016-211402 A (KOBE STEEL, LTD.) 15 December 2016 & US 2018/0156110 A1 & WO 2016/178358 A1 & EP 3290671 A1 & CN 107532510 A | 1-8 |
| A | JP 2017-8867 A (KOBE STEEL, LTD.) 12 January 2017 (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013509529 T